# EUROPEAN PATENT APPLICATION

(11) **EP 2 910 530 A1**
(43) Date of publication of application: **26.08.2015**
(21) Application number: 13846346.8
(22) Date of filing: 17.10.2013
(51) Int. Cl.: C02F 3/20, B01D 65/02, C02F 1/44, C02F 3/12

(54) **AIR DIFFUSION DEVICE, AIR DIFFUSION METHOD, AND WATER TREATMENT DEVICE**

(30) Priority: 19.10.2012 JP 2012231888
(71) Applicant: Mitsubishi Rayon Co., Ltd., Tokyo 100-8253 (JP)
(72) Inventor: FURUNO, Shinsuke, Toyohashi-shi Aichi 440-8601 (JP); SASAKAWA, Manabu, Tokyo 100-8253 (JP); KIRA, Fumihiro, Tokyo 100-8253 (JP)
(74) Representative: Hoffmann Eitle
(86) International application number: PCT/JP2013/078182
(87) International publication number: WO 2014/061737

(57) **Abstract**

The present invention relates to an air diffusion device comprising a tubular main pipe for receiving a supply of air from an air supply device, and a branch pipe connected to the main pipe, wherein the branch pipe is connected at one end to the main pipe and open at the other end, one or more air diffusion holes are formed in the branch pipe, at least some of the air diffusion holes are formed so as to be at the top in the vertical direction when the main pipe is laid horizontally, and the branch pipe is configured so that the opening at the other end faces downward in the vertical direction. According to the present invention, it is possible to provide an air diffusion device in which water to be treated is caused to flow into an air diffusion pipe, thereby allowing closing of the air diffusion holes to be suppressed and sediment to be easily removed in the branch pipe as well as an air diffusion method and water treatment device in which this air diffusion device is used.

## Description

### TECHNICAL FIELD

The present invention relates to an air diffusion device disposed below a membrane module unit, an air diffusion method using the same, and a water treatment device including the air diffusion device disposed below the membrane module unit.

The invention claims the benefit of Japanese Patent Application No. 2012-231888, filed on October 19, 2012, in the Japanese Intellectual Property Office, the entire disclosure of which is incorporated herein.

### BACKGROUND ART

Recently, an investigation has been conducted into a variety of methods of performing solid-liquid separation of activated sludge using a membrane module unit in which a separation membrane such as a microfiltration membrane or an ultrafiltration membrane is arranged. For example, when activated sludge process equipment is formed as a water treatment device including the membrane module unit, and water to be treated containing activated sludge is filtering by the separation membrane using the activated sludge process equipment, it is possible to obtain high-quality treated water.

However, when solid-liquid separation of water to be treated is performed using the separation membrane, a surface of the separation membrane progressively clogs due to suspended matter (solid content) as filtering continues. As a result, a filtration rate decreases, or an inter-membrane differential pressure increases.

In this regard, in the related art, to prevent the surface of the separation membrane from clogging, washing has been performed by arranging an aeration pipe below the membrane module unit, diffusing air from an aeration hole of the aeration pipe to generate air bubbles, and hitting the membrane module unit with a gas-liquid mixing flow containing a liquid to be treated and the air bubbles formed by rising of the air bubbles. In other words, there is a known scheme in which suspended matter such as sludge attached to a surface of a membrane module is separated and removed from the membrane module by a gas-liquid mixing flow.

However, when an operation for washing is continuously performed for a long period of time, it is difficult to uniformly hit the membrane module with the air bubbles (gas-liquid mixing flow) due to clogging of the aeration hole and sludge accumulating in the aeration pipe. As a result, an insufficiently washed portion remains on the surface of the membrane module, and it is difficult to stably perform a solid-liquid separation treatment (filtering).

In addition, the solid-liquid separation treatment may be prevented from becoming unstable by cleaning the aeration pipe when the aeration hole clogs and sludge accumulates in the aeration pipe. However, in this case, a relatively long period of time is required for a cleaning operation of the aeration pipe, and thus the cleaning operation is demanding.

Moreover, if air is sent into the aeration pipe at a high rate when the aeration hole clogs and sludge accumulates in the aeration pipe, an air sending device such as a blower consumes a large amount of power, which leads to increase in cost. On the other hand, if air is sent at a low rate, air bubbles are not generated from the aeration hole, and thus the membrane module is not hit by air bubbles (gas-liquid mixing flow). Therefore, the surface of the membrane module is insufficiently washed.

In this regard, a technology of Patent Document 1 is proposed as a solution for clogging of the aeration hole and sludge accumulating in the aeration pipe and with regard to washing of the aeration pipe. In the technology of Patent Document 1, aeration is suspended to make aeration target water flow backward into the aeration pipe from a tip opening of the aeration pipe and each exhaust nozzle, and make a foreign substance, which dries and accumulates near the exhaust nozzle, wet by the influent water, and then aeration is resumed, thereby removing the foreign substance.

In addition, each of Patent Documents 1 to 3 proposes a configuration in which an air exhaust nozzle is provided at a distal end of a horizontal portion of the aeration pipe (branch pipe) to improve washing effect of the membrane module.

### CITATION LIST

### PATENT DOCUMENT

Patent Document 1: JP 2002-307091 A
Patent Document 2: JP 2010-119976 A
Patent Document 3: JP 3784236 B1

### SUMMARY OF THE INVENTION

### PROBLEM TO BE SOLVED BY THE INVENTION

However, in the technology of Patent Document 1, exposure to the atmosphere is required to make the aeration target water flow into the aeration pipe. Therefore, a valve or the like therefor is needed, which entails increase in cost and a complicated device configuration.

Moreover, in Patent Documents 1 to 3, the air exhaust nozzle is provided at the distal end of the horizontal portion of the aeration pipe (branch pipe). Therefore, air spouts out more easily from the air exhaust nozzle of the distal end of the horizontal portion than from the aeration hole depending on feed rates of air. A long aeration pipe (branch pipe) may be formed to improve the above-described phenomenon and suppress air that spouts out from the air exhaust nozzle, thereby diffusing more air from the aeration hole. However, in this case, an area of the air diffusion device increases. Consequently, an installation area of the water treatment device (membrane separation device) increases.

The invention has been conceived in view of the above described situation, and an object of the invention is to provide an air diffusion device that resolves the above problem, an air diffusion method using the same, and a water treatment device.

### MEANS FOR SOLVING PROBLEM

The invention has embodiments described below.
[1] An air diffusion device including a tubular main pipe supplied with gas from a gas supply device, and a branch pipe connected to the main pipe, wherein the branch pipe includes one end directly or indirectly connected to the main pipe and the other end having an opening, and has one or a plurality of aeration holes formed on a side surface, and the branch pipe is configured such that all the aeration holes face upward in a vertical direction and the opening at the other end faces downward in the vertical direction in a state in which the main pipe is laid horizontally.
[2] The air diffusion device according to [1], wherein a region in which the aeration holes of the branch pipe are formed is horizontal in the state the main pipe is laid horizontally, and the opening at the other end faces downward in the vertical direction in the state in which the main pipe is laid horizontally when a bent portion is provided near the other end of the branch pipe.
[3] The air diffusion device according to [1] or [2], wherein a plurality of branch pipes are provided, and all the branch pipes are disposed to be parallel to one another, each of the plurality of branch pipes corresponding to the branch pipe.
[4] The air diffusion device according to any one of [1] to [3], wherein the branch pipes are disposed to have bilateral symmetry with respect to a center of the main pipe.
[5] The air diffusion device according to any one of [1] to [4], wherein a vertical pipe portion extending downward from a lower portion of the main pipe in the state in which the main pipe is laid horizontally is provided in the main pipe to communicate with an inside of the main pipe, and two or more branch pipes are connected to and communicate with the main pipe through the vertical pipe portion.
[6] The air diffusion device according to any one of [1] to [5], wherein the branch pipes are detachably connected to the main pipe through a fixed member.
[7] The air diffusion device according to [6], wherein the vertical pipe portion extending downward from the lower portion of the main pipe in the state in which the main pipe is laid horizontally is provided in the main pipe to communicate with the inside of the main pipe, the fixed member is attached to the vertical pipe portion by a fixation mechanism using a union or a screw, and two of the branch pipes are connected to the one fixed member through the communication members that allow one ends of aeration pipes to communicate with each other.
[8] The air diffusion device according to any one of [1] to [7], wherein the number of the aeration holes formed in each of the branch pipes is from 2 to 6 per branch pipe.
[9] The air diffusion device according to any one of [1] to [8], wherein each of the branch pipes has a length of 500 mm or less.
[10] The air diffusion device according to any one of [1] to [9], further comprising a decompression unit for reducing pressures in the branch pipes.
[11] The air diffusion device according to any one of [1] to [10], wherein an internal diameter D of each of the branch pipes is 10 mm or more and 20 mm or less, and a diameter d of each of the aeration holes is 4.5 mm or more and 7.0 mm or less.
[12] An air diffusion method including an aeration process of arranging the air diffusion device according to any one of [1] to [11] in a treatment tank storing water to be treated and including a membrane module unit, and continuously supplying gas to the branch pipes through the main pipe for a predetermined period of time, and then a suspension process of suspending supply of gas for a certain period of time, wherein the processes are repeatedly performed.
[13] The air diffusion method according to [12], wherein pressures of insides of the branch pipes are reduced during the suspension process.
[14] A water treatment device including a water tank, a membrane module unit disposed in the water tank, and the air diffusion device according to any one of [1] to [11] disposed below the membrane module unit.

In addition, the invention has aspects below:
<1> An air diffusion device including a tubular main pipe supplied with gas from a gas supply device, and a branch pipe connected to the main pipe, wherein the branch pipe includes one end connected to the main pipe and the other end having an opening, and has one or a plurality of aeration holes, and at least some of the aeration holes are formed to face upward in a vertical direction and the branch pipe is configured such that the opening at the other end faces downward in the vertical direction in a state in which the main pipe is laid horizontally;
<2> The air diffusion device according to <1>, wherein the branch pipe further includes a bent portion;
<3> The air diffusion device according to <1> or <2>, wherein the branch pipe is arranged to be horizontal in the state in which the main pipe is laid horizontally;
<4> The air diffusion device according to any one of <1> to <3>, wherein a plurality of branch pipes are provided, and all the branch pipes are disposed to be parallel to one another, each of the plurality of branch pipes corresponding to the branch pipe;
<5> The air diffusion device according to any one of <1> to <4>, wherein the branch pipes are symmetrically disposed with respect to a central axis of the main pipe when the air diffusion device is seen in the vertical direction in plan view in the state in which the main pipe is laid horizontally;
<6> The air diffusion device according to any one of <1> to <5>, further including a vertical pipe portion, wherein the vertical pipe portion extends downward from a lower portion of the main pipe in the state in which the main pipe is laid horizontally and communicates with an inside of the main pipe, and the branch pipes are connected to and communicate with the main pipe through the vertical pipe portion;
<7> The air diffusion device according to any one of <1> to <6>, further including a fixed member, wherein the branch pipes are detachably connected to the main pipe through the fixed member;
<8> The air diffusion device according to <7>, further including communication members for allowing one ends of the branch pipes to communicate with each other, wherein the fixed member is attached to the vertical pipe portion by a fixation mechanism using a union or a screw, and two of the branch pipes are connected to the one fixed member through the communication members;
<9> The air diffusion device according to any one of <1> to <8>, wherein the number of the aeration holes formed in each of the branch pipes is 2 or more and 15 or less per branch pipe;
<10> The air diffusion device according to any one of <1> to <9>, wherein each of the branch pipes has a length of 200 mm or more and 500 mm or less;
<11> The air diffusion device according to any one of <1> to <10>, wherein a length Δh from a tangent line of an upper end to the opening at the other end of each of the branch pipes is 2 or more and 5 or less times an internal diameter D of each of the branch pipes;
<12> The air diffusion device according to any one of <1> to <11>, wherein a position of an aeration hole nearest to the opening at the other end of each of the branch pipes is set to a position directly below a distal portion of a membrane element installed in an upper portion of the air diffusion device, or within a range of ±a/2 from the position directly below the distal portion of the membrane element of each of the branch pipes when a space between the aeration holes is set to a;
<13> The air diffusion device according to any one of <1> to <12>, wherein the opening at the other end of each of the branch pipes is provided on an outside of the aeration hole nearest to the opening at the other end;
<14> The air diffusion device according to any one of <1> to <13>, wherein the internal diameter D of each of the branch pipes is 10 mm or more and 20 mm or less, and a diameter d of each of the aeration holes is 4.5 mm or more and 7.0 mm or less;
<15> An air diffusion method including an aeration process of arranging the air diffusion device according to any one of <1> to <14> in a treatment tank storing water to be treated and including a membrane module unit, and continuously supplying gas to the branch pipes through the main pipe for a predetermined period of time, and then a suspension process of suspending supply of gas for a certain period of time, wherein the processes are repeatedly performed;
<16> The air diffusion method according to <15>, further including a process of allowing water to be treated to flow into the branch pipes after the suspension process; and
<17> A water treatment device including a water tank, a membrane module unit disposed in the water tank, and the air diffusion device according to any one of <1> to <16> disposed below the membrane module unit.

### EFFECT OF THE INVENTION

According to the air diffusion device of the invention, at least some of the aeration holes formed in each of the branch pipes face upward in the vertical direction and the opening at the other end faces downward in the vertical direction in the state in which the main pipe is laid horizontally. According to this configuration, it is possible to allow water to be treated to flow into the branch pipes and the main pipe simply by suspending supply of gas to suspend aeration when the water to be treated is allowed to flow into the branch pipes and the main pipe. Therefore, a valve or the like for exposure to the atmosphere is not needed, and thus it is possible to prevent the aeration holes from being clogged and sludge from being accumulated in the branch pipes without entailing increase in cost and a complicated device configuration.

In addition, according to the air diffusion device of the invention, the branch pipes are easily aligned, and the branch pipes are easily replaced and maintained by detachably connecting the branch pipes to the main pipe through the fixed member.

Further, according to the air diffusion method of the invention, the method includes an aeration process of arranging the air diffusion device in a treatment tank, and continuously supplying gas to the branch pipes through the main pipe for a predetermined period of time to wash the membrane module unit, and then a suspension process of suspending supply of gas for a certain period of time. Thus, it is possible to allow water to be treated to flow into the branch pipes and the main pipe while supply of gas is suspended. According to the air diffusion method, it is possible to prevent the aeration holes from being clogged and sludge from being accumulated in the branch pipes.

Furthermore, it is possible to prevent air from flowing out from the opening and enlarge a region in which air stably flows when the opening of the other end of each of the branch pipes ensures a length in a vertically downward direction and the opening of the other end is provided on an outside of an aeration hole provided in a position nearest to the opening of the other end (hereinafter, also referred to as a distal aeration hole).

### BRIEF DESCRIPTION OF DRAWINGS

Fig. 1 is a plan view illustrating an air diffusion device according to an embodiment of the invention;
Fig. 2 is a side view of the air diffusion device illustrated in Fig. 1;
Fig. 3 is a front view of the air diffusion device illustrated in Fig. 1;
Fig. 4 is a perspective view illustrating a branch pipe according to an embodiment of the invention;
Fig. 5 is a side view illustrating a membrane module unit according to an embodiment of the invention;
Fig. 6 is a front view illustrating the membrane module unit according to the embodiment of the invention; and
Fig. 7 is a diagram schematically illustrating a general configuration of a water treatment device according to an embodiment of the invention.

### MODE(S) FOR CARRYING OUT THE INVENTION

Hereinafter, the invention will be described in detail with reference to drawings. In the drawings below, a scale of each member is appropriately changed such that each member is recognizable.

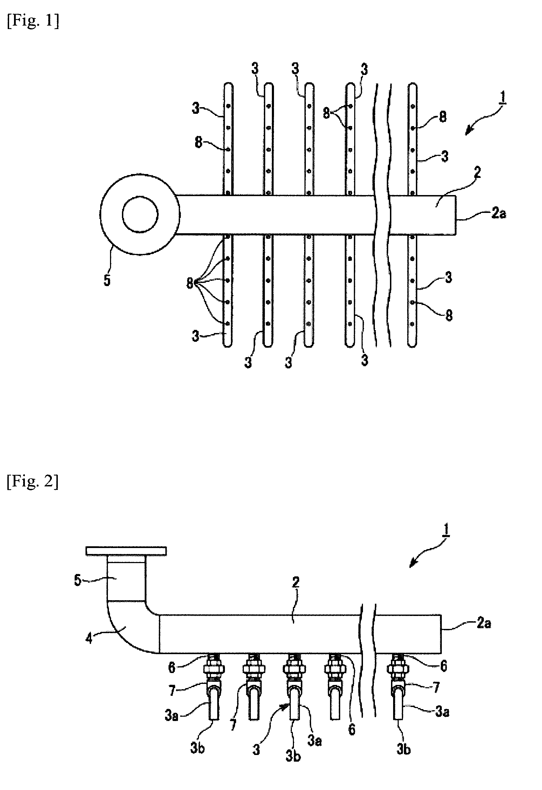

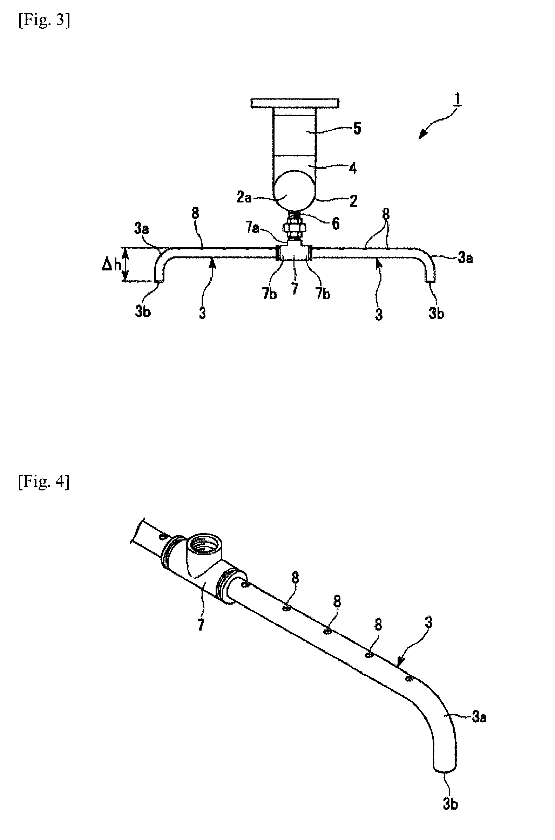

Fig. 1 is a plan view illustrating an air diffusion device according to an embodiment of the invention, Fig. 2 is a side view of the air diffusion device illustrated in Fig. 1, and Fig. 3 is a front view of the air diffusion device illustrated in Fig. 1.

In the drawings, reference numeral 1 denotes the air diffusion device, and the air diffusion device 1 includes a cylindrical main pipe 2 supplied with gas from an air supply device and a plurality of branch pipes 3 connected to the main pipe 2.

As illustrated in Fig. 2, the main pipe 2 is made of metal, for example, SUS 304, and a flange pipe 5 is connected to one end side of the main pipe 2 through an elbow pipe 4. As described below, when another flange pipe is connected to the flange pipe 5, the air supply device (gas supply device) is connected thereto.

In addition, the other end side of the main pipe 2 is not open and is blocked by being covered with a lid 2a, thereby forming an airtight structure. In other words, the main pipe 2 has one end portion connected to the elbow pipe 4 such that the flange pipe 5 is connected thereto, and the other end portion to be covered with the lid 2a.

Further, in one aspect of the invention, when the air diffusion device is seen in a vertical direction in plan view in a state in which the main pipe is laid horizontally, a length from the one end portion to the other end portion of the main pipe 2 is preferably 150 to 2500 mm, more preferably 200 to 2200 mm.

Furthermore, the main pipe 2 has an internal diameter of preferably 20 to 100 mm, more preferably 40 to 90 mm in terms of a space between aeration holes. The internal diameter of the main pipe 2 refers to a diameter of a portion, through which a liquid or gas actually flows, obtained by subtracting a thickness of the pipe from a diameter of the main pipe 2. In addition, the cylindrical main pipe 2 preferably has a circular cross section which is perpendicular to a longitudinal direction of the cylindrical main pipe 2. In addition, when the cross section has an oval shape, the internal diameter of the main pipe 2 refers to a longest line among straight lines drawn on the cross section of the main pipe 2 to pass through a center of the main pipe 2. In addition, it is preferable that the main pipe 2 have a shape in which the internal diameter does not change in the longitudinal direction of the main pipe 2.

The main pipe 2 is configured such that one side of the elbow pipe 4 (a side opposite to a side connected to the main pipe 2) faces upward in the vertical direction, and thus the flange pipe 5 connected thereto faces upward in the vertical direction when a central axis of the main pipe 2 is disposed in a horizontal direction, that is, when the main pipe 2 is laid horizontally.

In addition, a vertical pipe portion 6 extending downward from a lower portion of the main pipe 2 is provided to communicate with an inside of the main pipe 2 in a state in which the main pipe 2 is laid horizontally. In other words, when the main pipe 2 is laid such that the central axis thereof is horizontal, the vertical pipe portion 6 is provided in a region perpendicular to the central axis below the central axis on a tubular side surface of the main pipe 2. The vertical pipe portion 6 extends below the main pipe 2, that is, toward a lower side in the vertical direction with respect to the central axis of the main pipe 2, and communicates with an inside of the main pipe 2.

In the present embodiment, a threaded portion is formed on an outer circumference (or an inner circumference) of the vertical pipe portion 6, and the threaded portion is used when a fixed member 7 is detachably connected to a lower end side, that is, a side not communicating with the main pipe 2 of the vertical pipe portion 6. As illustrated in Fig. 3, the fixed member 7 is a three-way tube (T tube) formed to have a shape of a letter T, and includes a central pipe portion 7a connected to the vertical pipe portion 6 by a fixation mechanism using union connection or screw connection. In other words, the fixed member 7 is detachably connected to the vertical pipe portion 6 such that a threaded portion formed on the central pipe portion 7a of the fixed member 7 is connected to the threaded portion of the vertical pipe portion 6 using a union or a screw.

With regard to connection of the fixed member 7, for example, it is possible to fix the fixed member 7 in a fitted manner instead of using the union connection or the screw connection. However, as described below, it is preferable that the fixed member 7 be connected to the vertical pipe portion 6 by the union connection or the screw connection to reliably prevent the branch pipe 3 connected to the fixed member 7 from being detached.

The fixed member 7 includes pipe portions (communication members) 7b formed at both sides and horizontally disposed to extend in a direction perpendicular to the central axis of the main pipe 2 in a state in which the central pipe portion 7a is connected to the vertical pipe portion 6.

Herein, in the present embodiment, a plurality of (for example, five to ten) vertical pipe portions 6 are provided to be equally spaced along the longitudinal direction of the main pipe 2. Therefore, a plurality of fixed members 7 equal in number to the vertical pipe portions are provided to correspond to the plurality of vertical pipe portions 6. In other words, the fixed members 7 are connected to the respective vertical pipe portions 6.

In an aspect of the invention, a distance between the vertical pipe portions 6 is preferably 30 to 100 mm, more preferably 45 to 90 mm. Here, the distance between the vertical pipe portions 6 refers to a distance from a center of one of the vertical pipe portions 6 to a center of another one of the vertical pipe portions 6 adjacent to the one of the vertical pipe portions 6 when the air diffusion device is seen in the vertical direction in plan view in the state in which the main pipe is laid horizontally.

One end portion of the branch pipe 3 is connected to each of the pipe portions 7b at the both ends of the fixed member 7. The branch pipe 3 is made of metal, for example, SUS 304, functions as an aeration pipe, and includes one or a plurality of aeration holes 8 formed in a side surface thereof. In addition, the branch pipe 3 has an opening at another end portion not connected to each of the pipe portions 7b.

The number of aeration holes 8 provided in the branch pipe 3 is appropriately determined based on a length of the branch pipe 3. However, the number is preferably 2 to 15, more preferably 3 to 6.

In the present embodiment, as illustrated in Fig. 4, five aeration holes 8 are formed to be spaced (equally spaced) by about 50 mm to 120 mm. In addition, as illustrated in Figs. 1 and 3, all the aeration holes 8 are formed to face upward in the vertical direction in the state in which the main pipe 2 is laid horizontally. Further, in another aspect of the invention, even though it is preferable that all the aeration holes 8 face upward in the vertical direction, it is more preferable that at least some of the aeration holes 8 face upward in the vertical direction. As described above, when at least some of the aeration holes 8 face upward in the vertical direction, the other aeration holes may face in any direction.

In other words, the branch pipe 3 is formed such that a region on the side surface in which the aeration holes 8 are formed is horizontal in the state the main pipe 2 is laid horizontally. In addition, in another aspect of the invention, the branch pipe 3 is formed such that a portion of the region on the side surface thereof in which the aeration holes 8 are formed is horizontal in the state the main pipe 2 is laid horizontally.

Moreover, the branch pipe 3 is configured such that a bent portion 3a is formed in the opening at another end, and thus an opening 3b at the other end faces downward in the vertical direction in the state in which the main pipe 2 is laid horizontally. In other words, in one aspect of the invention, the branch pipe 3 includes the aeration holes 8, the bent portion 3a, and the opening 3b at the other end.

The bent portion 3a may be formed by bending and processing the other end portion of the branch pipe 3, or by assembling a component such as an elbow. However, it is preferable that a diameter of the opening 3b at the other end be the same as a diameter of the branch pipe 3. In addition, as illustrated in Fig. 3, a length Δh from a tangent line of an upper end to the opening 3b at the other end of the branch pipe 3 is preferably 2 to 5 times an internal diameter D of the branch pipe 3.

Further, for example, when air is supplied to the branch pipe 3 at a high flow rate, a pipe portion, which is formed by the bent portion 3a, facing downward in the vertical direction is preferably formed to have a relatively long length Δh of, for example, about 50 mm to 300 mm. The reason is that when a flow rate of air is large, a relatively large amount of air spouts out from the opening 3b at the other end, and thus uniformity of an amount of air spouting out from the aeration holes 8 may be affected. In this regard, when the pipe portion facing downward in the vertical direction of the branch pipe 3 is formed to have the long length Δh as described above, it is possible to prevent uniformity of the amount of air spouting out from the aeration holes 8 from being affected.

Based on the above-described configuration, it is preferable that all the branch pipes 3 be disposed to be parallel to one another. In addition, the branch pipe 3 is connected to each of the pipe portions 7b of the both sides of the fixed member 7 along the longitudinal direction, and thus the branch pipes 3 are symmetrically disposed with respect to the central axis of the main pipe 2 when the air diffusion device 1 is seen in the vertical direction in plan view in the state in which the main pipe 2 is laid horizontally.

The branch pipe 3 is formed to have a length of 500 mm or less, preferably 400 mm or less when seen in plan view, that is, in plan view from one end to the other end. When the length of the branch pipe 3 is short, the length is suitable for uniform air diffusion. However, it is preferable to select a length from a range of 200 mm or more, more preferably 250 mm or more in accordance with a size of a water treatment device. In other words, a distance from a portion of the branch pipe 3 connected to each of the pipe portions 7b to the opening 3b at the other end is preferably 200 mm or more and 500 mm or less, more preferably 250 mm or more and 400 mm or less.

In addition, the internal diameter D of the branch pipe 3 differs depending on the dimension (size) of the air diffusion device. However, the internal diameter D is preferably 10 mm or more and 20 mm or less. Here, the internal diameter D of the branch pipe 3 refers to a diameter of a portion, through which a liquid or gas actually flows, obtained by subtracting a thickness of the pipe from the diameter of the branch pipe 3. In addition, the branch pipe 3 preferably has a circular cross section which is perpendicular to the longitudinal direction. In addition, when the cross section has an oval shape, the internal diameter D of the branch pipe 3 refers to a longest line among straight lines drawn on the cross section of the branch pipe 3 to pass through a center of the branch pipe 3. In addition, it is preferable that the branch pipe 3 have a shape in which the internal diameter D does not change in the longitudinal direction thereof.

Further, a diameter d of each of the aeration holes 8 is preferably 4.5 mm or more and 7.0 mm or less. The reason for preferably setting the diameter d of each of the aeration holes 8 to 4.5 mm or more and 7.0 mm or less is that the aeration holes 8 are easily blocked when the diameter d is less than 4.5 mm, and a flow rate of air passing through the aeration holes 8 decreases and thus insufficient air diffusion effect may be obtained when the diameter d exceeds 7.0 mm. In other words, when the diameter d of each of the aeration holes 8 is 4.5 mm or more and 7.0 mm or less, the aeration holes 8 are less likely to be blocked, the flow rate of air passing through the aeration holes 8 does not excessively decrease, sufficient air diffusion effect is obtained, and thus it is preferable.

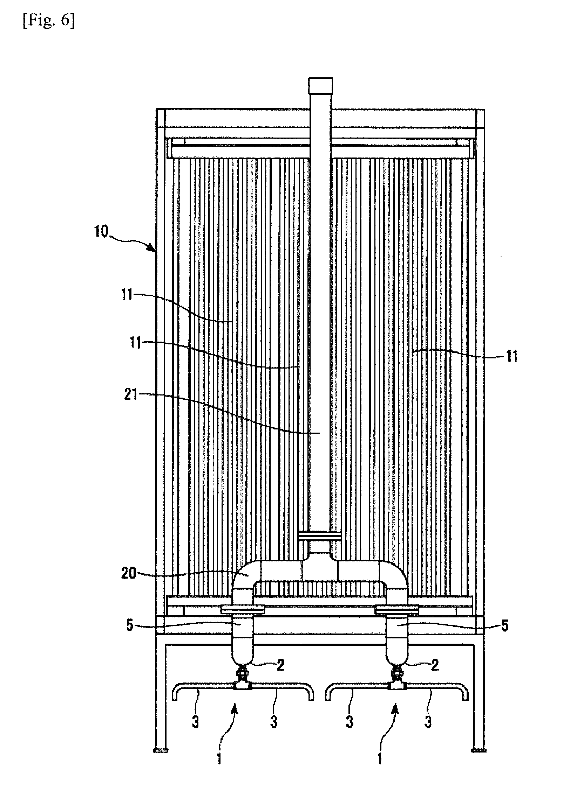

In addition, for example, as illustrated in Fig. 6, the air diffusion device 1 is disposed below the membrane module unit 10 and used to wash a membrane element of the membrane module unit 10. In this instance, a position of an aeration hole nearest to the opening 3b at the other end of the branch pipe 3 is preferably set to a position directly below a distal portion of the membrane element installed in an upper portion of the branch pipe 3, or within a range of ±a/2 from the position directly below the distal portion of the membrane element when a space between the aeration holes 8 is set to a. Here, the "distal portion of the membrane element" refers to an edge, in an edge portion of the membrane element, adjacent to the opening 3b at the other end of the branch pipe 3. Further, the "space a between the aeration holes 8" refers to a distance from a center of one of the aeration holes 8 to a center of another one of the aeration holes 8 adjacent to the one of the aeration holes 8 when the air diffusion device 1 is seen in the vertical direction in plan view in the state in which the main pipe 2 is laid horizontally. Furthermore, "within the range of ±a/2" means that the aeration hole nearest to the opening 3b at the other end is formed to be close to the main pipe 2 within a range of a/2 or formed to be close to the opening 3b at the other end within a range of a/2, using the position directly below the distal portion of the membrane element in the branch pipe 3 as a starting point.

Moreover, the opening 3b at the other end provided in the branch pipe 3 is preferably provided on the outside of the aeration hole which is nearest to the opening 3b at the other end described above. In other words, with regard to the branch pipe 3, it is preferable that the bent portion 3a be formed at a distal end side with respect to the aeration hole, and the opening 3b be provided in front of the bent portion 3 a.

In the air diffusion device 1 having the above-described configuration, for example, in addition to the air supply device (gas supply device), a decompression unit including a suction pump or the like is connected to the flange pipe 5. In this way, when an aeration operation for supplying air by the air supply device is suspended as described below, the liquid to be treated may be allowed to flow into the main pipe 2 and the branch pipe 3.

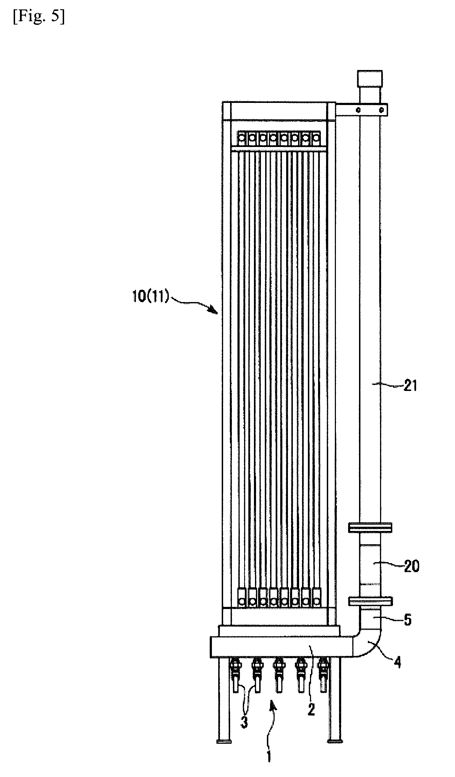

As illustrated in Figs. 5 and 6, the air diffusion device 1 having the above-described configuration is disposed below the membrane module unit 10 and used. The membrane module unit 10 includes a plurality of membrane modules 11, and each of the membrane modules 11 includes a membrane element such as a hollow fiber membrane.

In an example illustrated in Figs. 5 and 6, two air diffusion devices 1 illustrated in Figs. 1 and 3 are arranged to be adjacent to each other as illustrated in Fig. 6, and an air supply pipe 21 is connected to the flange pipe 5 of each of the air diffusion devices through one connecting pipe (flange pipe) 20. Further, as described below, an air supply device such as a blower is connected to the air supply pipe 21. In addition, in addition to the air supply device, the decompression unit including the suction pump or the like is connected to the air supply pipe 21.

In other words, in one aspect of the invention, it is preferable that the air diffusion device 1 be connected to the connecting pipe 20, which is connected to the air supply pipe 21, through the flange pipe 5. An entity that communicates with the air supply pipe 21 is switched between the air supply device and the decompression unit by a selector valve or the like. Therefore, the aeration operation for supplying air by the air supply device and a decompression operation for performing a decompressing process by the decompression unit may be switched by the selector valve.

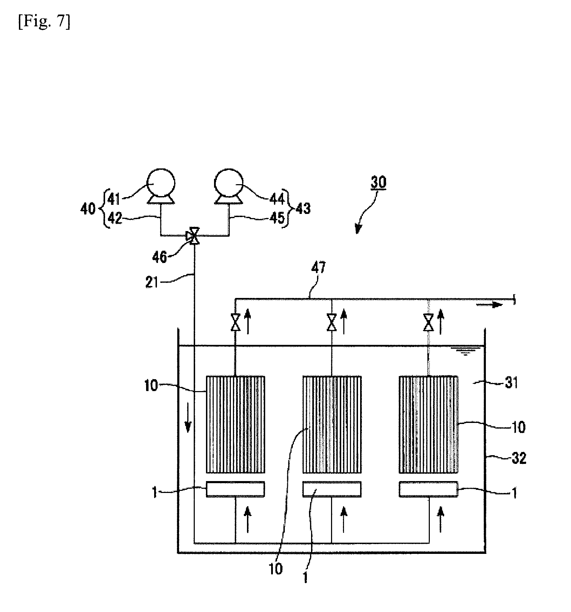

The membrane module unit 10 and the air diffusion device 1 are disposed in a water treatment device 30 illustrated in Fig. 7 and used. The water treatment device 30 corresponds to an embodiment of the water treatment device according to the invention, and includes a water tank (treatment tank) 32 filled with water to be treated 31 such as activated sludge, the membrane module unit 10 disposed in the water tank 32, the air diffusion device 1 disposed below the membrane module unit 10, an air supply device 40, a decompression unit 43, and a selector valve 46. The water treatment device 30 may be usefully used as an immersion-type membrane separation device. In the water treatment device 30 of the present embodiment, three membrane module units 10 are included. Therefore, the air diffusion device 1 is correspondingly disposed below each of the membrane module units 10. However, the number of membrane module units 10 and the number of air diffusion device 1 are not particularly limited, and may be appropriately set.

The water tank 32 has a shape of a rectangular parallelepiped and a size which is not particularly limited. However, the water tank 32 preferably has a depth sufficiently exceeding 1 m such that a depth of the water to be treated 31 is 1 m or more.

The air supply device 40 includes a blower 41 and a connection pipe 42 that connects the blower 41 to the air supply pipe 21. In addition, the decompression unit 43 includes a suction pump 44 and a connection pipe 45 that connects the suction pump 44 to the air supply pipe 21.

Further, the selector valve 46 configured as a three-way valve is provided among the connection pipe 42, the connection pipe 45, and the air supply pipe 21. Based on this configuration, by switching a state of the selector valve 46, the blower 41 (air supply device 40) may be allowed to communicate with the air supply pipe 21, or the suction pump 44 (decompression unit 43) may be allowed to communicate with the air supply pipe 21. In other words, as described above, it is possible to switch between the aeration operation and the decompression operation by the selector valve 46.

Furthermore, a suction pump is connected to the membrane module unit 10 (membrane modules 11) through a suction pipe 47 such that suction filtration may be performed by the membrane module unit 10.

In Fig. 7, the main pipe 2 and the branch pipe 3 of the air diffusion device 1, the connecting pipe 20, and the like are not illustrated for convenience. However, understandably, it is presumed that the air diffusion device indicated by reference numeral 1 in Fig. 7, includes two air diffusion devices 1 illustrated in Figs. 5 and 6, that is, two air diffusion devices 1 illustrated in Figs. 1 to 3.

Next, a description will be given of an embodiment of an air diffusion method according to the invention based on a treatment operation of the water treatment device 30.

First, as illustrated in Fig. 7, the membrane module unit 10, the air diffusion device 1, and the like are disposed in the water tank 32, and the water to be treated 31 is provided therein to have a predetermined water level (depth). Then, in this state, the suction pump on a side of the membrane module unit 10 is operated, thereby performing the suction filtration using the membrane module unit 10.

In addition, in parallel with the suction filtration, air is continuously supplied from the air supply device 40 (blower 41) toward the air diffusion device 1 for a predetermined period of time. A feed rate of air varies with a dimension or the like of the air diffusion device 1. However, for example, the feed rate is adjusted to 75 L/min for each branch pipe 3. When air is supplied in this way, a great part of air supplied to the air diffusion device 1 through the air supply pipe 21 spouts out from the aeration holes 8 of the branch pipe 3 by passing through the main pipe 2. In other words, when the aeration holes 8 have lower water pressures than a water pressure at the opening 3b at the other end of the branch pipe 3, a great part of air supplied to the air diffusion device 1 spouts out from the aeration holes 8 if the air is not supplied at a particularly high rate.

When the air spouts out from the aeration holes 8 in this way, the spouting air becomes air bubbles and moves upward in the water tank 32, that is, in the liquid to be treated 31. The air bubbles that move upward form a gas-liquid mixing flow by accompanying the liquid to be treated 31. The gas-liquid mixing flow washes each membrane element by hitting the membrane module unit 10 (membrane modules 11). In other words, the gas-liquid mixing flow separates suspended matter such as sludge attached to a surface of the membrane element (membrane module unit 10), and removes the suspended matter from the membrane module unit 10.

After performing the above-described aeration process for a predetermined period of time, a suspension process is performed to stop the blower 41 for a certain period of time to suspend supply of air to the air diffusion device 1. Then, air remaining in the main pipe 2 and the branch pipe 3 escapes from the aeration holes 8 and discharges into the water to be treated 31, thereby washing the membrane module unit 10. In addition, as a replacement for the air, the water to be treated 31 flows in from the opening 3b at the other end of the branch pipe 3. For example, the water to be treated 31 that flows in wets dried and accumulated foreign substance (sludge) that clogs the aeration holes 8 and sludge accumulated in the branch pipe 3. Therefore, when aeration is resumed by operating the blower 41 after the certain period of time, it is possible to easily discharge the foreign substance and the sludge from the aeration holes 8. That is, it is possible to wash an inside of the main pipe 2, an inside of the branch pipe 3, and the aeration holes 8.

In other words, in an embodiment of the air diffusion method of the invention, it is preferable to further include a process of allowing the water to be treated to flow into the branch pipe after performing the aeration process and the suspension process.

Further, a time required to perform the aeration process varies depending on types or the amount of sludge or the like attached to the surface of the membrane module unit. In general, the time is preferably 60 minutes to 480 minutes. Furthermore, in general, the process of allowing the water to be treated to flow into the branch pipe is performed preferably for 30 seconds to 120 seconds.

In addition, in the present embodiment, the decompression unit 43 is connected to the air diffusion device 1, and thus it is possible to reduce pressures in the main pipe 2 and the branch pipe 3 using the suction pump 44 by switching the state of the selector valve 46 such that the suction pump 44 (decompression unit 43) communicates with the air diffusion device 1 while the blower 41 is stopped for the certain period of time. When a decompression operation is performed in this way, it is possible to allow the water to be treated 31 to flow into the branch pipe 3 and the main pipe 2 at a higher speed and a higher flow rate, thereby improving washing effect.

In the air diffusion device 1 of the present embodiment, the branch pipe 3 is configured such that at least some of the aeration holes 8 face upward in the vertical direction and the opening 3b at the other end faces downward in the vertical direction in the state in which the main pipe 2 is laid horizontally. For this reason, it is possible to allow the water to be treated to flow into the branch pipe 3 and the main pipe 2 by simply suspending supply of air to suspend aeration when the water to be treated 31 is allowed to flow into the branch pipe 3 and the main pipe 2. Therefore, a valve or the like for exposure to the atmosphere is not needed, and thus it is possible to prevent the aeration holes 8 from being clogged and sludge from being accumulated in the branch pipe 3 without entailing increase in cost and a complicated device configuration.

Further, the air diffusion device 1 has a configuration in which a water pressure is high on a side of the opening 3b at the other end of the branch pipe 3, and thus a great part of air spouts out from the aeration holes 8, and air is less likely to spout out from the opening 3b at the other end when air is supplied. Therefore, it is possible to effectively wash the membrane modules 11, and reduce installation space by suppressing increase in size of the device.

Furthermore, the branch pipes 3 are disposed to have bilateral symmetry with respect to a center of the main pipe 2, and thus it is possible to reduce a distance from the main pipe 2 to a distal end of the branch pipe 3, and facilitate discharge of sludge in the branch pipe 3.

Moreover, the branch pipe 3 is detachably connected to the main pipe 2 through the fixed member 7, and thus the branch pipe 3 is easily aligned, and the branch pipe 3 is easily replaced and maintained.

In addition, the fixed member 7 including the T tube is attached to the vertical pipe portion 6, which extends downward from the lower portion of the main pipe 2, by the fixation mechanism using the union or the screw, and two branch pipes 3 are connected to the one fixed member 7, and thus the branch pipe 3 is horizontal below the main pipe 2. For this reason, it is possible to allow air to equally spout out from each branch pipe 3. Further, foreign substances are less likely to accumulate in the main pipe 2, and the foreign substances are evenly discharged from each branch pipe 3 together with air. Furthermore, it is possible to prevent the branch pipe 3 from being detached due to external shock or the like, and it is possible to dispose the branch pipes equally on both sides.

Moreover, when the number of the aeration holes 8 provided in each branch pipe 3 is set to from 2 to 15 per branch pipe, it is possible to reduce the amount of sludge attached to each one as a result of diffusion effect. Thus, even when some of the aeration holes 8 are blocked, it is possible to perform aeration by remaining aeration holes.

In addition, if the internal diameter D of the branch pipe 3 is set to 10 mm or more and 20 mm or less, and the diameter d of each of the aeration holes 8 is set to 4.5 mm or more and 7.0 or less, even when sludge is attached, it is possible to prevent the branch pipe 3 and the aeration holes 8 from being completely blocked, and it is possible to allow a fluid passing through the branch pipe 3 and the aeration holes 8 to have an appropriate flow rate. Accordingly, it is possible to improve washing performance when each branch pipe 3 and the aeration holes 8 are washed, and further improve effect of washing the inside of the branch pipe 3 and the aeration holes 8.

In addition, in the air diffusion method of the present embodiment, the air diffusion device 1 is arranged in the water tank (treatment tank) 32, and the membrane module unit 10 is washed by continuously supplying air to the branch pipe 3 through the main pipe 2 for a predetermined period of time, and then supply of air is suspended for a certain period of time. Thus, the water to be treated 31 may be allowed to flow into the branch pipe 3 and the main pipe 2 while supply of air is suspended. In this way, it is possible to prevent the aeration holes 8 from being clogged, and sludge from being accumulated in the branch pipe 3.

Although preferred embodiments of the invention have been described with reference to drawings, the invention is not limited to the embodiments. All shapes, combinations, and the like of the respective components illustrated in the above-described embodiments are merely examples, and may be variously changed based on a requirement of design within the scope of the invention.

For example, in the above embodiments, the air supply device is connected to the one end side of the main pipe 2 through the elbow pipe 4 and the flange pipe 5, and the other end side is blocked by the lid 2a. However, depending on a dimension (size) of the air diffusion device 1, in other words, for example, when the air diffusion device 1 has a large capacity, both ends of the main pipe 2 may be opened, and the air supply device may be connected to the both ends, thereby supplying air from the both ends of the main pipe 2.

In addition, the main pipe 2 or the branch pipe 3 may be made of, for example, a synthetic resin such as polyvinyl chloride instead of metal.

Moreover, in the above embodiments, air is supplied to the air diffusion device from the air supply device, and air is allowed to spout out from the aeration holes. However, for example, gas other than air, such as nitrogen, may be supplied to the air diffusion device from the gas supply device as necessary.

### EXAMPLES

Hereinafter, the invention will be described in more detail using examples.

### (Example 1)

An air diffusion device made of SUS 304 was used as the air diffusion device 1 illustrated in Figs. 1 to 3. In addition, the used air diffusion device had a configuration in which two air diffusion devices 1 illustrated in Figs. 1 to 3 are provided to correspond to the dimension of the membrane module unit 10 as illustrated in Fig. 6, and the two air diffusion devices are connected to the one air supply pipe 21. Union connection was used to fix the fixed member 7 that connects the branch pipe 3 to the main pipe 2 of each air diffusion device 1.

The diameter (d) of each of the aeration holes 8 was set to 5.5 mm, and the space a between the aeration holes 8 adjacent to each other in the same branch pipe 3 was set to 100 mm. In addition, a feed rate of air from the air supply device 40 was set such that an amount of air that spouts out from each branch pipe 3 was 75 L/min.

Moreover, a distal aeration hole was positioned at a distance of 0 mm from a distal end of a membrane portion of the membrane element (directly below the distal portion of the membrane element).

In addition, the diameter (D) of the branch pipe was set to 13 mm, and a length Δh from the bent portion 3a to the opening 3b at the other end was set to 50 mm.

The membrane module unit 10 (membrane modules 11) illustrated in Figs. 5 and 6 obtained by installing a separation membrane in an upper portion of the air diffusion device was immersed in an activated sludge layer (the water to be treated 31) stored in the water tank 32 as illustrated in Fig. 7 to perform a solid-liquid separation treatment by membrane separation, and perform an aeration process (washing process) by the air diffusion device. Then, poorness of aeration due to blocked aeration holes 8 and performance of washing a surface of the membrane were verified.

When the membrane module unit 10 was verified after an operation was performed for 60 days, it was found that the solid-liquid separation treatment could be stably performed without the branch pipe 3 and the aeration holes 8 being blocked and the surface of the membrane being clogged.

Further, it was possible to efficiently perform aeration without air spouting out from the opening of the other end.

### (Example 2)

Similarly to Example 1, the air diffusion device illustrated in Figs. 1 to 3 was used. In addition, the diameter (d) of each of the aeration holes 8 was set to 5.5 mm, and the space a between the aeration holes 8 adjacent to each other in the same branch pipe 3 was set to 100 mm. In addition, the feed rate of air from the air supply device 40 was set such that an amount of air that spouts out from each branch pipe 3 was 75 L/min.

Moreover, the distal aeration hole was positioned at a distance of 70 mm from the distal end of the membrane portion of the membrane element. In addition, the diameter (D) of the branch pipe was set to 13 mm, and the length Δh from the bent portion 3a to the opening 3b at the other end was set to 50 mm.

When the membrane module unit 10 was verified after an operation was performed for 60 days similarly to Example 1, it was found that a part of sludge was attached to a portion near the distal end of the membrane portion while blockages in the branch pipe 3 and the aeration holes 8 were not found.

### (Example 3)

Similarly to Example 1, the air diffusion device illustrated in Figs. 1 to 3 was used. In addition, the diameter (d) of each of the aeration holes 8 was set to 5.5 mm, the space a between the aeration holes 8 adjacent to each other in the same branch pipe 3 was set to 100 mm, the feed rate of air from the air supply device 40 was set such that an amount of air that spouts out from each branch pipe 3 was 120 L/min.

In addition, the distal aeration hole was positioned at a distance of 50 mm from the distal end of the membrane portion of the membrane element, the diameter (D) of the branch pipe was set to 13 mm, and the length Δh from the bent portion 3a to the opening 3b at the other end was set to 15 mm.

When the membrane module unit 10 was verified after an operation was performed for 60 days similarly to Example 1, it was found that the solid-liquid separation treatment could be stably performed without the branch pipe 3 and the aeration holes 8 being blocked and the surface of the membrane being clogged.

However, some of air spouted out from the opening of the other end.

### (Example 4)

Similarly to Example 1, the air diffusion device illustrated in Figs. 1 to 3 was used. In addition, the diameter (d) of each of the aeration holes 8 was set to 5.5 mm, and the space a between the aeration holes 8 adjacent to each other in the same branch pipe 3 was set to 100 mm. In addition, the feed rate of air from the air supply device 40 was set such that an amount of air that spouts out from each branch pipe 3 was 150 L/min.

In addition, the diameter (D) of the branch pipe was set to 13 mm, Δh was set to 30 mm, and the opening of the other end of the branch pipe was installed directly below the distal aeration hole.

When the membrane module unit 10 was verified after an operation was performed for 60 days similarly to Example 1, it was found that the solid-liquid separation treatment could be stably performed without the branch pipe 3 and the aeration holes 8 being blocked and the surface of the membrane being clogged.

However, some of air spouted out from the opening of the other end.

### (Comparative Example 1)

An operation was performed for 60 days similarly to Example 1 using an air diffusion device in which at least some of aeration holes of a branch pipe face upward in a vertical direction and an opening of the other end of the branch pipe does not face downward in the vertical direction in a state in which a main pipe is laid horizontally.

When the membrane module unit 10 was verified after the operation similarly to Example 1, blockages in the branch pipe 3 and the aeration holes 8 and clogging of the surface of the membrane were found, and the solid-liquid separation treatment could not be stably performed.

Moreover, since the opening of the other end of the branch pipe does not face downward in the vertical direction, a large amount of air spouted out from the opening of the other end.

### (Comparative Example 2)

An operation was performed for 60 days similarly to Example 1 using an air diffusion device in which an opening of the other end of a branch pipe faces downward in the vertical direction and at least some of aeration holes of the branch pipe do not face upward in the vertical direction in a state in which a main pipe is laid horizontally.

When the membrane module unit 10 was verified after the operation similarly to Example 1, blockages in the branch pipe 3 and the aeration holes 8 and clogging of the surface of the membrane were found, and the solid-liquid separation treatment could not be stably performed.

The reason is that since the aeration holes faced downward, a liquid to be treated did not flow into the branch pipe when supply of air was suspended, an inside of the branch pipe could not be washed by the liquid to be treated, and the aeration holes were blocked.

### EXPLANATIONS OF LETTERS OR NUMERALS

1... Air diffusion device, 2... Main pipe, 2a... Lid, 3... Branch pipe, 3a... Bent portion, 3b... Opening, 6... Vertical pipe portion, 7... Fixed member, 7b... Pipe portion (communication member), 8... Aeration hole, 10... Membrane module unit, 11... Membrane module, 21... Air supply pipe, 30... Water treatment device, 31... Water to be treated, 32... Water tank, 40... Air supply device, 41... Blower, 43... Decompression unit, 44... Suction pump, 46... Selector valve

## Claims

1. An air diffusion device comprising:
a tubular main pipe supplied with gas from a gas supply device; and
a branch pipe connected to the main pipe,
wherein the branch pipe includes one end connected to the main pipe and the other end having an opening, and has one or a plurality of aeration holes, and
at least some of the aeration holes are formed to face upward in a vertical direction and the branch pipe is configured such that the opening at the other end faces downward in the vertical direction in a state in which the main pipe is laid horizontally.

2. The air diffusion device according to claim 1, wherein the branch pipe further includes a bent portion.

3. The air diffusion device according to claim 1 or 2, wherein the branch pipe is arranged to be horizontal in the state in which the main pipe is laid horizontally.

4. The air diffusion device according to any one of claims 1 to 3, wherein a plurality of branch pipes are provided, and all the branch pipes are disposed to be parallel to one another, each of the plurality of branch pipes corresponding to the branch pipe.

5. The air diffusion device according to any one of claims 1 to 4, wherein the branch pipes are symmetrically disposed with respect to a central axis of the main pipe when the air diffusion device is seen in the vertical direction in plan view in the state in which the main pipe is laid horizontally.

6. The air diffusion device according to any one of claims 1 to 5, further comprising
a vertical pipe portion,
wherein the vertical pipe portion extends downward from a lower portion of the main pipe in the state in which the main pipe is laid horizontally and communicates with an inside of the main pipe, and the branch pipes are connected to and communicate with the main pipe through the vertical pipe portion.

7. The air diffusion device according to any one of claims 1 to 6, further comprising
a fixed member,
wherein the branch pipes are detachably connected to the main pipe through the fixed member.

8. The air diffusion device according to claim 7, further comprising
communication members for allowing one ends of the branch pipes to communicate with each other,
wherein the fixed member is attached to the vertical pipe portion by a fixation mechanism using a union or a screw, and
two of the branch pipes are connected to the one fixed member through the communication members.

9. The air diffusion device according to any one of claims 1 to 8, wherein the number of the aeration holes formed in each of the branch pipes is 2 or more and 15 or less per branch pipe.

10. The air diffusion device according to any one of claims 1 to 9, wherein each of the branch pipes has a length of 200 mm or more and 500 mm or less.

11. The air diffusion device according to any one of claims 1 to 10, wherein a length Δh from a tangent line of an upper end to the opening at the other end of each of the branch pipes is 2 or more and 5 or less times an internal diameter D of each of the branch pipes.

12. The air diffusion device according to any one of claims 1 to 11, wherein a position of an aeration hole nearest to the opening at the other end of each of the branch pipes is set to a position directly below a distal portion of a membrane element installed in an upper portion of the air diffusion device, or within a range of ±a/2 from the position directly below the distal portion of the membrane element of each of the branch pipes when a space between the aeration holes is set to a.

13. The air diffusion device according to any one of claims 1 to 12, wherein the opening at the other end of each of the branch pipes is provided on an outside of the aeration hole nearest to the opening at the other end.

14. The air diffusion device according to any one of claims 1 to 13,
wherein the internal diameter D of each of the branch pipes is 10 mm or more and 20 mm or less, and
a diameter d of each of the aeration holes is 4.5 mm or more and 7.0 mm or less.

15. An air diffusion method comprising:
an aeration process of arranging the air diffusion device according to any one of claims 1 to 14 in a treatment tank storing water to be treated and including a membrane module unit, and continuously supplying gas to the branch pipes through the main pipe for a predetermined period of time; and then
a suspension process of suspending supply of gas for a certain period of time,
wherein the processes are repeatedly performed.

16. The air diffusion method according to claim 15, further comprising
a process of allowing water to be treated to flow into the branch pipes after the suspension process.

17. A water treatment device comprising:
a water tank;
a membrane module unit disposed in the water tank; and
the air diffusion device according to any one of claims 1 to 16 disposed below the membrane module unit.
